# EUROPEAN PATENT APPLICATION

(11) **EP 2 650 565 A1**
(43) Date of publication of application: **16.10.2013**
(21) Application number: 11847610.0
(22) Date of filing: 28.11.2011
(51) Int. Cl.: F16H 48/40, F16H 48/38, F16H 48/42

(54) **DIFFERENTIAL DEVICE**

(30) Priority: 10.12.2010 JP 2010276105
(71) Applicant: UD Trucks Corporation, Ageo-shi Saitama 362-8523 (JP)
(72) Inventor: NAKAO, Toshiaki, Ageo-shi Saitama 362-8523 (JP)
(74) Representative: Grünecker, Kinkeldey, Stockmair & Schwanhäusser
(86) International application number: PCT/JP2011/077387
(87) International publication number: WO 2012/077521

(57) **Abstract**

A differential includes a ring gear which is engaged with a drive gear, a differential case which integrally rotates with the ring gear, axle shafts which are coaxially arranged on left and right sides, a side gear which integrally rotates with the left axle shaft and a side gear which integrally rotates with the right axle shaft, a pinion gear which is engaged with each side gear, a spider shaft which rotatably supports the pinion gear on the differential case, and a carrier case which rotatably supports the drive gear. The carrier case rotatably supports each side gear and the left axle shaft or the right axle shaft rotatably supports the spider shaft of the differential case.

## Description

### TECHNICAL FIELD

The present invention relates to a differential.

### BACKGROUND ART

JP2010-121641A and JP1996-49758A disclose a differential. The differential is configured, for example, as shown in FIG. 3. A drive gear 50 is driven by a propeller shaft. The drive gear 50 is rotatably supported on a carrier case 51 via a bearing. A pilot bearing 52 supports a tip portion of the drive gear 50. A ring gear 53 is engaged with the drive gear 50.

The ring gear 53 is attached to a differential case 55. A central portion of the differential case 55 is bag-shaped and pinion gears 56 and side gears 57a, 57b to be described later are housed inside this central portion. The differential case 55 is rotatably supported on the carrier case 51 via bearings 58a, 58b.

The left side gear 57a integrally rotates with a left axle shaft. The right side gear 57b integrally rotates with a right axle shaft. The pinion gears 56 are engaged with each side gear 57a, 57b and are attached to differential case 55 via a spider shaft 59. The spider shaft 59 is formed by connecting four shaft portions in a crisscross manner. Each shaft portion of the spider shaft 59 rotatably supports the pinion gear 56.

The rotation of the drive gear 50 is transmitted to the differential case 55 via the ring gear 53 and the pinion gears 56 revolve with the rotation of the differential case 55. When the pinion gears 56 revolve, the left and right axle shafts rotate together with the respective side gears 57a, 57b. If there is a difference in rotational resistance (load) between the left and right axle shafts, each pinion gears 56 rotates according to the rotational resistance. In this way, the rotation speed of the axle shaft on a low-load side increases while that of the axle shaft on a high-load side decreases.

### SUMMARY OF THE INVENTION

Since the side gears 57a, 57b and the pinion gears 56 are housed in the bag-shaped portion (central portion) of the differential case 55 in the above differential, there is a possibility that the supply of lubricant (this is, for example, scooped up by the drive gear) becomes insufficient. This may possibly make it difficult to ensure lubrication performance of each sliding portion and cause seizure of each sliding portion.

The present invention aims to improve lubrication performance of a differential.

According to one aspect of the present invention, a differential is provided which comprises a ring gear which is engaged with a drive gear, a differential case which integrally rotates with the ring gear, axle shafts which are coaxially arranged on left and right sides, a side gear which integrally rotates with the left axle shaft and a side gear which integrally rotates with the right axle shaft, a pinion gear which is engaged with each side gear, a spider shaft which rotatably supports the pinion gear on the differential case, and a carrier case which rotatably supports the drive gear, wherein the carrier case rotatably supports each side gear and the left axle shaft or the right axle shaft rotatably supports the spider shaft of the differential case.

Embodiments of the present invention and advantages thereof are described in detail below with reference to the accompanying drawings.

### BRIEF DESCRIPTION OF DRAWINGS

FIG. 1 is a sectional view showing a differential according to an embodiment of the present invention.
FIG. 2 is a view showing rotation transmission paths of the differential according to the embodiment of the present invention.
FIG. 3 is a sectional view showing a conventional differential.

### EMBODIMENTS OF THE INVENTION

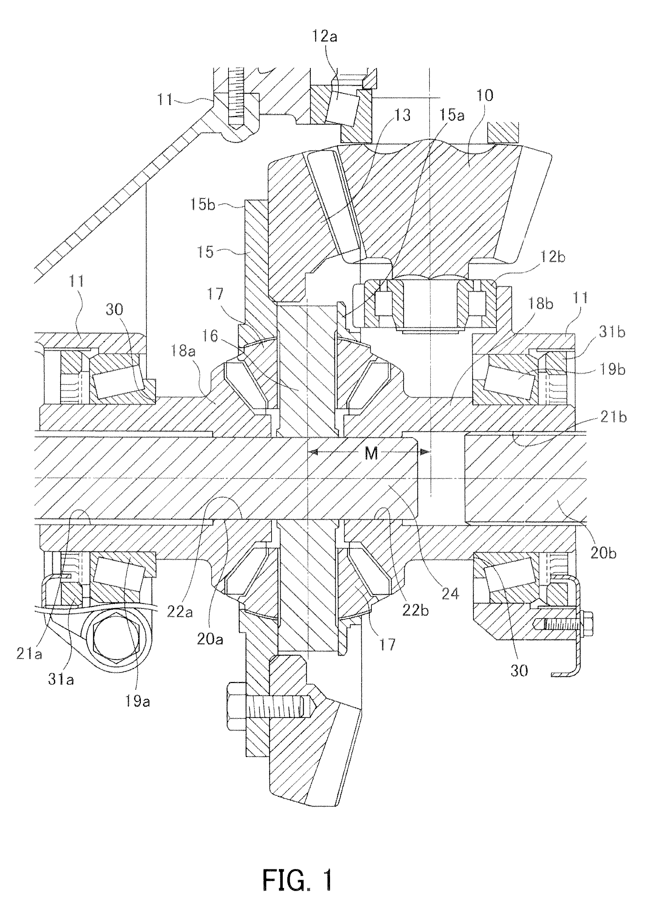

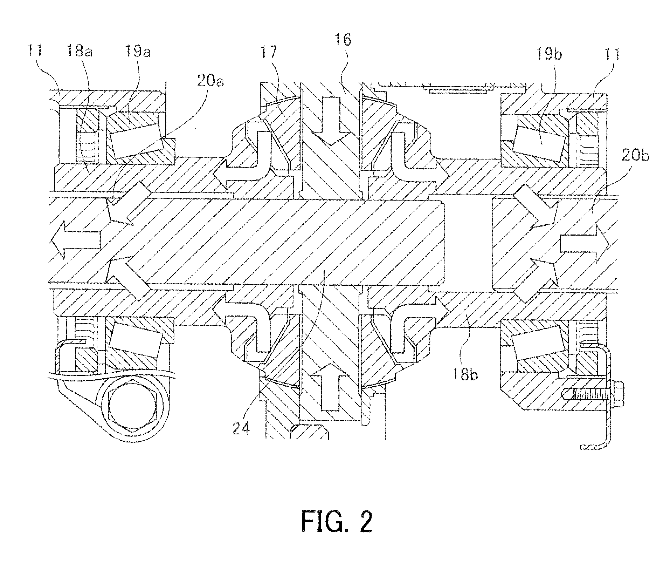

In FIGS. 1 and 2, a drive gear 10 is driven by a propeller shaft. The drive gear 10 is rotatably supported on a carrier case 11 via bearings 12a, 12b. The bearing 12a supports a shaft (drive shaft coupled to the propeller shaft) of the drive gear 10. The pilot bearing 12b supports a tip portion of the drive gear 10. A ring gear 13 is engaged with the drive gear 10. A final speed reduction ratio is set based on the number of teeth of the drive gear 10 and that of teeth of the ring gear 13.

The ring gear 13 is attached to a differential case 15. A spider shaft 16 is provided in the differential cause 15. The spider shaft 16 is formed by connecting four shaft portions in a crisscross manner. Each shaft portion of the spider shaft 16 rotatably supports a pinion gear 17.

Side gears 18a, 18b are engaged with the pinion gears 17 and coaxially arranged at the left and right sides of the pinion gears 17. The side gears 18a, 18b are rotatably supported on the carrier case 11 respectively via bearings 19a, 19b. The left side gear 18a integrally rotates with a left axle shaft 20a. The right side gear 18b integrally rotates with a right axle shaft 20b.

Each side gear 18a, 18b includes a spline hole 21a, 21b with a spline groove engaged with a spline groove of the axle shaft 20a, 20b. The side gear 18a, 18b further includes a through hole 22a, 22b which is open on the same axis as the spline hole 21a, 21b. One axle shaft 20a includes a shaft portion 24 (extension shaft) coaxially extending toward the axle shaft 20b. The extension shaft 24 rotatably supports the spider shaft 16 and rotatably supports the side gear 18b that integrally rotates with the right axle shaft 20b.

The side gears 18a, 18b and the axle shafts 20a, 20b are spline-connected to be integrally rotatable about an axis and displaceable in an axial direction. The spider shaft 16 and the side gears 18a, 18b are displaceable in the axial direction on the extension shaft 24 rotatably supporting these.

Steps 30 for locking inner races of the bearings 19a, 19b are formed on the outer peripheries of the side gears 18a, 18b. Outer races of the bearings 19a, 19b are engaged with the carrier case 11 to be displaceable in the direction. Adjuster nuts 31a, 31b can fix the bearings 19a, 19b and the side gears 18a, 18b at predetermined positions by fastening the outer races of the bearings 19a, 19b from opposite sides of a differential gear.

As shown in FIG. 2, the rotation of the drive gear 10 is transmitted to the differential case 15 via the ring gear 13 and the pinion gears 17 revolve with the rotation of the differential case 15. When the pinion gears 17 revolve, the left and right axle shafts 20a, 20b rotate together with the respective side gears 18a, 18b. If there is a difference in rotational resistance (load) between the left and right axle shafts 20a, 20b, each pinion gear 17 rotates. In this way, the rotation speed of the axle shaft on a low-load side increases while that of the axle shaft on a high-load side decreases. Arrows of FIG. 2 indicate transmission paths of rotational forces associated with the revolution of the pinion gears 17.

Since each side gear 18a, 18b is supported on the carrier case 11 instead of being assembled with the differential case 15, a structure for rotatably supporting each side gear 18a, 18b can be omitted from the differential case 15.

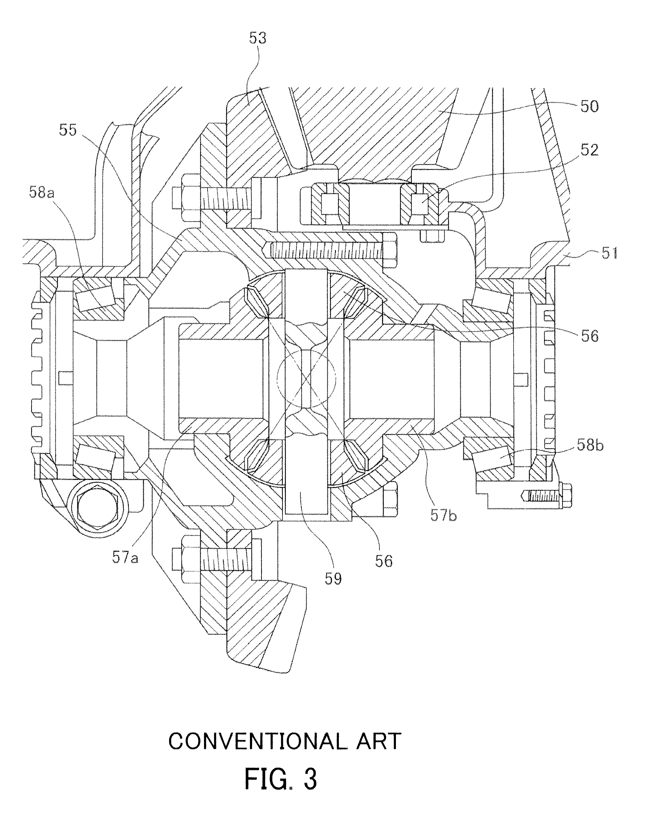

The differential case 15 is composed of a central portion 15a supporting the spider shaft 16 and a peripheral edge portion 15b forming a mounting portion for the ring gear 13 and so formed that opposite sides of the central portion 15a are widely open. That is, as compared with the conventional differential case 55 (see FIG. 3), a part which rotatably supports the side gears 57a, 57b by covering the side gears 57a, 57b on the opposite sides and is supported on the carrier case 51 via the bearings 58a, 58b is omitted.

Thus, the side gears 18a, 18b and the pinion gears 17 are exposed from the differential case 15 and more easily come into contact with lubricant scooped up by the drive gear 10, wherefore lubrication performance of the differential can be improved. Further, the differential cause 15 can be made smaller in size and lighter in weight.

Although the differential cause 15 is not supported on the carrier case 11, necessary support performance can be ensured since the differential case 15 is rotatably supported on the extension shaft 24 of the axle shaft 20a via the spider shaft 16. Further, since not only the left side gear 18a, but also the right side gear 18b is supported by the extension shaft 24, support performance of the entire differential gear can be sufficiently improved.

Since the differential case 15 and the side gears 18a, 18b are displaceable in the axial direction in this embodiment, an adjustment of a mounting distance M made in association with a change in the final speed reduction ratio can be easily dealt with without exchanging the differential case 15. Specifically, the adjustment of the mounting distance M associated with a change in the final speed reduction ratio can be made by loosening the adjuster nuts 31a, 31b and displacing the differential case 15 and the side gears 18a, 18b in the axial direction.

The embodiments of the present invention described above are merely illustration of some application examples of the present invention and not of the nature to limit the technical scope of the present invention to the specific constructions of the above embodiments.

For example, although the extension shaft 24 rotatably supports the side gear 18b engaged with the axle shaft 20b on the opposite side, this part may be omitted.

The present application claims a priority based on Japanese Patent Application No. 2010-276105 filed with the Japan Patent Office on December 10, 2010, all the contents of which are hereby incorporated by reference.

### INDUSTRIAL APPLICABILITY

This invention can be applied to differentials of various machines without being limited to application to vehicle differentials.

## Claims

1. A differential, comprising:
a ring gear which is engaged with a drive gear;
a differential case which integrally rotates with the ring gear;
axle shafts which are coaxially arranged on left and right sides;
a side gear which integrally rotates with the left axle shaft and a side gear which integrally rotates with the right axle shaft;
a pinion gear which is engaged with each side gear;
a spider shaft which rotatably supports the pinion gear on the differential case; and
a carrier case which rotatably supports the drive gear,
wherein the carrier case rotatably supports each side gear and the left axle shaft or the right axle shaft rotatably supports the spider shaft of the differential case.

2. The differential according to claim 1, wherein:
the left axle shaft or the right axle shaft rotatably supporting the spider shaft of the differential case includes an extension shaft coaxially extending toward the axle shaft on an opposite side; and
the extension shaft rotatably supports the spider shaft and rotatably supports the side gear that integrally rotates with the axle shaft on the opposite side.

3. The differential according to claim 2, wherein:
the left axle shaft and the left side gear, and the right axle shaft and the right side gear are engaged to be integrally rotatable about an axis and displaceable in an axial direction;
the spider shaft, each side gear and the extension shaft are set to be displaceable in the axial direction; and
each side gear and the carrier case are configured to be displaceable in the axial direction.
